(19) Europäisches Patentamt
European Patent Office
Office européen des brevets

(11) **EP 2 571 737 B1**

(12) **EUROPÄISCHE PATENTSCHRIFT**

(45) Veröffentlichungstag und Bekanntmachung des Hinweises auf die Patenterteilung:
**20.01.2016 Patentblatt 2016/03**

(21) Anmeldenummer: **11718983.7**

(22) Anmeldetag: **05.05.2011**

(51) Int Cl.:
***B60T 17/22*** *(2006.01)*

(86) Internationale Anmeldenummer:
**PCT/EP2011/057212**

(87) Internationale Veröffentlichungsnummer:
**WO 2011/144455 (24.11.2011 Gazette 2011/47)**

(54) **VERFAHREN ZUR ERKENNUNG EINES GASEINSCHLUSSES IN EINEM HYDRAULISCHEN BREMSSYSTEM**

DEVICE FOR DETECTING A GAS OCCLUSION IN A HYDRAULIC BRAKE SYSTEM

PROCÉDÉ POUR DÉTECTER UNE BULLE DE GAZ DANS UN SYSTÈME DE FREINAGE HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2010 DE 102010029220**

(43) Veröffentlichungstag der Anmeldung:
**27.03.2013 Patentblatt 2013/13**

(73) Patentinhaber: **Robert Bosch GmbH**
**70442 Stuttgart (DE)**

(72) Erfinder:
• KUNZ, Michael
  **71711 Steinheim an der Murr (DE)**
• KINDER, Ralf
  **71522 Backnang (DE)**
• EPPLER, Steffen
  **71638 Ludwigsburg (DE)**

(56) Entgegenhaltungen:
**WO-A1-03/053754     DE-A1- 19 603 863**

## Beschreibung

Die Erfindung bezieht sich auf ein Verfahren zur Erkennung eines Gaseinschlusses in einem hydraulischen Bremssystem, insbesondere in Kraftfahrzeugen und ein Steuergerät ausgelegt zur durchführung dieses Verfahrens.

Stand der Technik

Dokument DE 196 03 863 offenbart ein gattungsgemäßes Verfahren und Steuergerät.

Bekannt sind Bremsanlagen mit hydraulischer Bremskraftverstärkung, die einen Hauptzylinder zur Erzeugung eines hydraulischen Bremsdrucks umfassen, welcher über Hydraulikleitungen mit den Radbremszylindern verbunden ist. Bei einer Betätigung des Bremspedals wird ein erhöhter Druck im Hauptbremszylinder erzeugt und auf die Radbremszylinder übertragen.

Falls sich bei derartigen hydraulischen Bremssystemen Luft im Bremskreis befindet, wird zur Erreichung eines bestimmten Drucks aufgrund der höheren Kompressibilität der Luft im Vergleich zur Kompressibilität des Hydraulikmediums ein größeres Volumen benötigt, wodurch ein nachgiebigeres Pedalverhalten entsteht. Bei sogenannten Brake-by-Wire-Systemen ist das Pedalverhalten des Bremspedals vom Bremssystem zumindest teilweise entkoppelt, so dass Veränderungen der Steifigkeit im Bremssystem für den Fahrer nicht oder nur in reduzierter Weise wahrnehmbar sind. Sofern die Luftmenge im Bremssystem einen kritischen Wert nicht übersteigt, kann die erhöhte Elastizität im Bremssystem selbsttätig ausgeglichen werden, ohne dass dies für den Fahrer am Verzögerungsverhalten zu erkennen ist. Damit wird jedoch dem Fahrer die Möglichkeit genommen, den Gaseinschluss im Bremssystem festzustellen. Wenn zu dem Gaseinschluss ein weiterer, signifikanter Systemfehler hinzutritt, beispielsweise der Ausfall eines Bremskreises, kann die Leistungsfähigkeit des Bremssystems aufgrund des Gaseinschlusses unter Umständen nicht mehr den aktuellen Anforderungen genügen.

Offenbarung der Erfindung

Der Erfindung liegt die Aufgabe zugrunde, einen Gaseinschluss in einem hydraulischen Bremssystem zu detektieren. Der Gaseinschluss soll auch in Brake-by-Wire-Systemen erkannt werden können.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren bezieht sich auf hydraulische Bremssysteme, vorzugsweise in Kraftfahrzeugen, die üblicherweise eine Bremsdruckerzeugungseinheit und eine Radbremseinheit, insbesondere einen Radbremszylinder sowie ein Bremspedal umfassen. Das Bremspedal ist in der Ausführung als Brake-by-Wire-System vom Bremssystem zumindest teilweise entkoppelt, so dass der Fahrer über das Bremspedal keine oder nur in reduzierter Weise eine Rückmeldung über den aktuellen Zustand im Bremssystem erhält. Überschreitet der Gaseinschluss einen kritischen Grenzwert, so kann dies dem Fahrer angezeigt und/oder in einer Speichereinheit abgespeichert werden sowie gegebenenfalls zu weiteren Maßnahmen führen, beispielsweise zur Aktivierung oder Deaktivierung weiterer Fahrzeugkomponenten oder zur Änderung von Kennlinien im Bremssystem. Damit besteht insbesondere die Möglichkeit, einen zu hohen Gaseinschluss frühzeitig zu erkennen und Gegenmaßnahmen zu ergreifen, bevor der Gaseinschluss in Kombination mit weiteren Fehlern zu gefährlichen Fahrsituationen führt oder eine weitere Verschlechterung durch Zunahme des Gaseinschlusses droht.

Bei dem erfindungsgemäßen Verfahren zur Erkennung des Gaseinschlusses im hydraulischen Bremssystem wird bei einem Bremsvorgang der Druckgradient des Hydraulikmediums aus dem Verhältnis von verschobenem Hydraulikvolumen im Bremssystem und dem zugeordneten Druck bestimmt. Es werden zwei verschiedene Druckgradienten bei verschiedenen Drücken bzw. Druckbereichen ermittelt, aus denen ein Quotient berechnet wird. Dieser Quotient aus den beiden Druckgradienten wird als Druckgradientenkennwert für die Beurteilung herangezogen, ob ein kritischer Gaseinschluss im hydraulischen Bremssystem besteht. Dies ist der Fall, wenn der Druckgradientenkennwert außerhalb eines definierten Wertebereiches liegt, insbesondere einen zugeordneten Schwellenwert überschreitet.

Das erfindungsgemäße Verfahren basiert auf der Erkenntnis, dass die Volumen-Druck-Kennlinie eines hydraulischen Bremssystems nichtlinear verläuft, beispielsweise parabelförmig. Der grundsätzliche Kennlinienverlauf wird zwar auch im Falle eines Gaseinschlusses beibehalten, allerdings ändern sich aufgrund des Gaseinschlusses bestimmte Kurvenparameter. Aufgrund des größeren Volumens des Gases und der höheren Kompressibilität liegt die Volumen-Druck-Kurve eines hydraulischen Bremssystems im Falle eines Gaseinschlusses oberhalb der Kurve ohne Gaseinschluss; die Kurven verlaufen bei mittleren und höheren Drücken annähernd parallel versetzt zueinander, wobei im Bereich des ursprungsnahen Anstieges, also bei kleinere Drücken, die Volumen-Druck-Kurve mit Gaseinschluss eine höhere Steifigkeitsänderung als ohne Gaseinschluss aufweist. Dies ist auf die hohe Kompressibilität des Gases zurückzuführen, da mit zunehmendem Druck das Volumen rasch reduziert wird, was zu einem deutlichen Abknicken der Kurve führt. Über das Verhältnis der Druckgradienten kann der Unterschied im Anstieg der Kurven mit und ohne Gaseinschluss detektiert werden. Im Falle eines regulär arbeitenden Systems ohne Gaseinschluss bzw. mit einem lediglich geringen Gaseinschluss, der unterhalb eines kritischen Grenzwertes liegt, liegt der Druckgradientenkennwert, gebildet aus dem Quotienten von zwei aufeinander folgenden Druckgradienten, unterhalb eines Schwellenwertes, wohingegen im Falle eines kritischen Gaseinschlusses der Druckgradientenkennwert den zugeordneten Schwellenwert überschreitet, was festgestellt und zur Anzeige gebracht bzw. in diversen Fahrzeugsystemen verarbeitet werden kann.

Grundsätzlich genügt es, zwei verschiedene Druckgradienten aus dem Verhältnis von verschobenem Hydraulikvolumen zu einem zugeordneten Druck bzw. Druckbereich zu bestimmen und daraus den Druckgradientenkennwert zu ermitteln, wobei es zweckmäßig ist, den ersten Druckgradienten im ursprungsnahen Bereich der Volumen-Druck-Kennlinie zu bestimmen. Der zweite Druckgradient wird sinnvollerweise im unmittelbaren Anschluss an den Druckbereich des ersten Druckgradienten bestimmt; grundsätzlich möglich ist aber auch ein Druckabstand zwischen dem Druckbereich des ersten Druckgradienten und dem Druckbereich des zweiten Druckgradienten. Im unteren, ursprungsnahen Bereich sind typische Druckkennwerte ca. 2 bis 10 bar, im zweiten, sich hieran anschließenden mittleren Druckbereich betragen die hydraulischen Druckwerte beispielsweise 10 bar bis 30 bar. Hintergrund dieser Betrachtungsweise insbesondere für den unteren Druckbereich des ersten Druckgradienten ist der starke Anstieg der Kurve im Falle eines Gaseinschlusses im Bremssystem.

Das Verfahren wird zweckmäßigerweise nur bis zum Erreichen eines Maximaldrucks durchgeführt, da bei höheren Druckwerten der Gaseinschluss in der Volumen-Druck-Kurve allein über die Betrachtung der Druckgradienten nur mit größerer Ungenauigkeit festzustellen ist. Darüber hinaus bzw. alternativ können weitere Bedingungen formuliert werden, die erfüllt sein müssen, damit das erfindungsgemäße Verfahren zur Erkennung des Gaseinschlusses durchgeführt wird. So hat es sich als zweckmäßig erwiesen, das Verfahren nur für den Fall durchzuführen, dass die Betätigungsgeschwindigkeit des Bremspedals innerhalb eines zulässigen Wertebereiches liegt, insbesondere nur bei mittlerer Pedalbetätigungsgeschwindigkeit. Extrem langsame bzw. schnelle Pedalbetätigungen schließen dagegen das Verfahren zur Erkennung des Gaseinschlusses aus, um sicherzustellen, dass über diese extremen Pedalbetätigungen keine verfälschenden Einflüsse Berücksichtigung finden.

Des Weiteren ist es zweckmäßig, das Verfahren zur Erkennung des Gaseinschlusses nur im Falle eines Lüftspiels (Abstand zwischen Reibbelag und Bremsscheibe der Radbremse) innerhalb eines regulären Wertebereiches durchzuführen. Dies ist üblicherweise der Fall, wenn vor dem Verfahren zunächst ein Bremsvorgang mit einem Bremsdruck innerhalb eines zulässigen Wertebereiches stattgefunden hat und anschließend der Zeitabstand zwischen diesem Bremsvorgang und dem Bremsvorgang mit Gasschlusserkennung einen Maximalwert nicht übersteigt. Zusätzlich oder alternativ zur Berücksichtigung des Bremsdruckes, der bei dem vorangegangenen Bremsvorgang innerhalb eines zulässigen Wertebereiches liegen muss, können auch Querbeschleunigungen berücksichtigt werden, die zwischen dem vorangegangenen Bremsvorgang und dem aktuellen Bremsvorgang, bei dem das Verfahren zur Gasschlusserkennung durchgeführt wird, einen Maximalwert nicht überschreiten dürfen.

Das erfindungsgemäße Verfahren ist grundsätzlich zur Durchführung in hydraulischen oder elektrohydraulischen Bremssystemen geeignet. Das Verfahren läuft in einem Regel- bzw. Steuergerät ab, welches zweckmäßigerweise Bestandteil des Bremssystems ist bzw. mit diesem kommuniziert.

Weitere Vorteile und zweckmäßige Ausführungen sind den weiteren Ansprüchen, der Figurenbeschreibung und den Zeichnungen zu entnehmen. Es zeigen:

Fig. 1    in schematischer Darstellung ein hydraulisches Bremssystem in einem Kraftfahrzeug,

Fig. 2    eine Volumen-Druck-Kennlinie des hydraulischen Bremssystems.

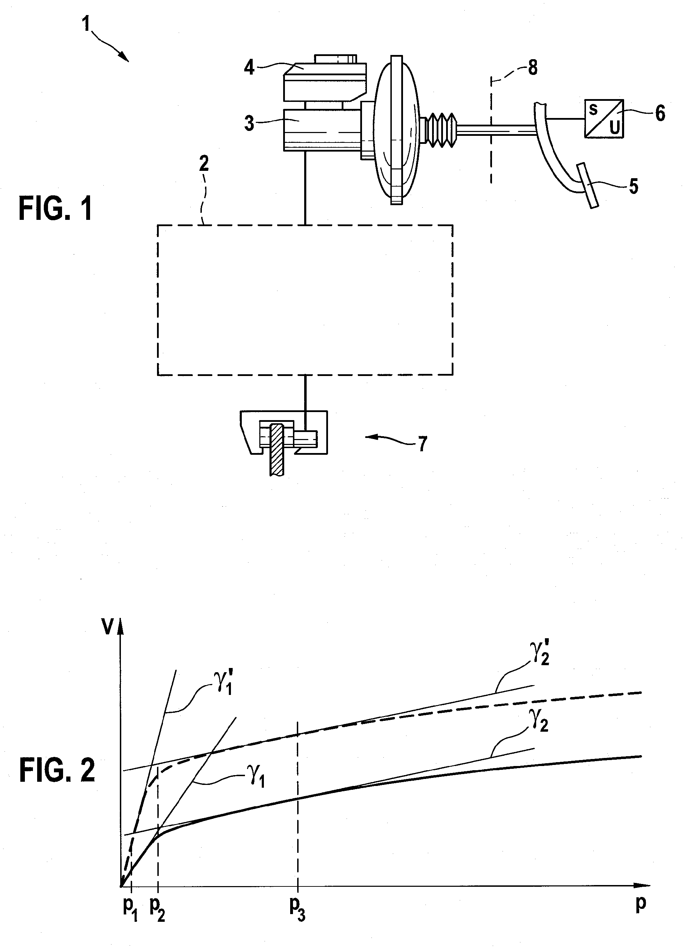

Das in Fig. 1 dargestellte hydraulische Bremssystem 1 umfasst einen nur schematisch gezeigten Bremskreis 2, einen Hauptbremszylinder 3, dem ein Bremsflüssigkeitsvorratsbehälter 4 zugeordnet ist, ein Bremspedal 5 mit einem Pedalwegsensor 6 sowie eine Radbremsvorrichtung 7. Der Bremskreis 2 ist hydraulisch an den Hauptbremszylinder 3 angeschlossen, der über den Bremsflüssigkeitsvorratsbehälter 4 mit Bremsfluid versorgt wird. Der Hauptbremszylinder 3 wird vom Fahrer über das Bremspedal 5 betätigt, wobei der vom Fahrer ausgeübte Pedalweg über den Pedalwegsensor 6 ermittelt wird. Die vom Fahrer erzeugte und im Hauptbremszylinder 3 verstärkte Bremskraft bzw. der Bremsdruck wird über dem Bremskreis 2 auf die einem Fahrzeugrad zugeordnete Radbremsvorrichtung 7 übertragen.

Das Bremssystem 1 kann als Brake-by-Wire-Bremssystem ausgeführt sein, bei dem die Betätigung des Bremspedals 5 mechanisch bzw. hydraulisch vom Bremskreis 2 entkoppelt ist. Hierbei wird die Bremspedalbetätigung sensorisch erfasst und ein mit der Bremspedalbetätigung korrelierendes Stellsignal zur Erzeugung des gewünschten Bremsdruckes generiert. Symbolisiert ist dies in Fig. 1 mit der Trennlinie 8 zwischen dem Bremspedal 5 und dem Hauptbremszylinder 3.

In Fig. 2 ist ein Volumen-Druck-Diagramm dargestellt, welches charakteristisch ist für das Bremssystem 2. Eingetragen sind in das Diagramm zwei Volumen-Druck-Kurven, von denen die mit durchgezogenem Strich dargestellte Kurve den Zusammenhang ohne Gaseinschluss im Bremssystem und die mit strichlierter Linie dargestellte Kurve den Zusammenhang mit Gaseinschluss im Bremssystem kennzeichnet. Die strichlierte Kurve mit Gaseinschluss liegt oberhalb der durchgezogenen Kurve ohne Gaseinschluss, die beiden Kurven verlaufen abgesehen von dem ursprungsnahen Bereich zumindest annähernd parallel zueinander. Im unteren, ursprungsnahen Druckbereich sind Steigungen $\gamma_1$ bzw. $\gamma_1$' an die jeweiligen Kurvenverläufe ohne bzw. mit Gaseinschluss angelegt. Im mittleren Druckbereich sind entsprechende Steigungen $\gamma_2$ bzw. $\gamma_2$' an die Kurvenverläufe angelegt. Die Steigungen $\gamma_1$ bzw. $\gamma_1$' und $\gamma_2$ bzw. $\gamma_2$' stellen die Druckgradienten dar, also die Ableitungen der Volumenkurven nach der Zeit gemäß

$$\gamma_1 = \frac{\Delta V_1}{\Delta p_1}, \; \gamma_2 = \frac{\Delta V_2}{\Delta p_2},$$

wobei $\Delta p_1$ die Druckdifferenz zwischen den Druckwerten $p_1$ und $p_2$ bezeichnet und $\Delta V_1$ die zugehörige Volumendifferenz. Entsprechend bezeichnet $\Delta p_2$ die Druckdifferenz zwischen den Druckwerten $p_2$ und $p_3$ und $\Delta V_2$ die zugehörige Volumendifferenz.

Wie dem Kurvenverlauf in Fig. 2 zu entnehmen, weist die Kurve ohne Gaseinschluss im unteren, ursprungsnahen Druckbereich zwischen $p_1$ und $p_2$ einen kleineren Druckgradienten $\gamma_1$ auf als die Kurve mit Gaseinschluss, deren Druckgradienten mit $\gamma_1$' bezeichnet ist. Im mittleren Druckbereich zwischen $p_2$ und $p_3$ sind dagegen die Druckgradienten $\gamma_2$ und $\gamma_2$' aufgrund des zumindest annähernd parallelen Verlaufs der Kurven etwa gleich groß.

Der ursprungsnahe Anstieg der Volumen-Druck-Kurven erfolgt bei beiden Kurven mit einem größeren Gradienten als im mittleren und oberen Druckbereich. Die Differenz zwischen den Druckgradienten $\gamma_1$ und $\gamma_1$' liegt beispielsweise im Verhältnis 2:5. Der Druckwert $p_2$ kennzeichnet den Übergang zwischen den höheren Gradienten im ursprungsnahen Bereich und den niedrigeren Gradienten im mittleren und oberen Druckbereich. Beispielhafte Werte sind 2 bar für $p_1$, 10 bar für $p_2$ und 30 bar für $p_3$. Grundsätzlich ist es auch möglich, den ersten Druckwert $p_1$ auf Null zu setzen, so dass der Druckgradient $\gamma_1$ zwischen dem Ursprung und dem Übergangsbereich bei $p_2$ zwischen dem unteren und mittleren Druckbereich kennzeichnet.

Um einen Gaseinschluss im Bremssystem festzustellen, wird ein Druckgradientenkennwert R aus dem Verhältnis des ersten Druckgradienten $\gamma_1$ bzw. $\gamma_1$' zum zweiten Druckgradienten $\gamma_2$ bzw. $\gamma_2$' gemäß

$$R = \frac{\gamma_1}{\gamma_2}$$

bzw.

$$R = \frac{\gamma_1'}{\gamma_2'}$$

gebildet. Der Druckgradientenkennwert R unterscheidet sich zwischen den beiden Kurvenverläufen erheblich, da der erste Druckgradient $\gamma_1$' der Kurve mit Gaseinschluss signifikant größer ist als der Druckgradient $\gamma_1$ der Kurve ohne Gaseinschluss. Es ergibt sich beispielsweise ein Wert von 2 für den Druckgradientenkennwert R für die Kurve ohne Gaseinschluss und ein Wert von 5 für die Kurve mit Gaseinschluss.

Über einen Vergleich des berechneten Druckgradientenkennwertes R mit einem zugeordneten Grenz- bzw. Schwellenwert $R_{lim}$ kann somit mit hoher Sicherheit ein Gaseinschluss festgestellt werden. Hierbei wird überprüft, ob der Druckgradientenkennwert R den Schwellenwert $R_{lim}$ übersteigt. Ist dies der Fall, kann von einem Gaseinschluss ausgegangen werden, woraufhin ein Fehlersignal erzeugt wird, das dem Fahrer zur Anzeige gebracht und/oder abgespeichert wird, wobei gegebenenfalls auch selbsttätig Ausgleichsmaßnahmen im System getroffen werden können, um einem möglichen Bremsdruckabfall entgegenzuwirken.

Grundsätzlich kann auch aus dem Verhältnis der verschobenen Volumina $\Delta V_1$ zu $\Delta V_2$, die den Druckbereichen der $\Delta p_1$ zwischen $p_1$ und $p_2$ und $\Delta p_2$ zwischen $p_2$ und $p_3$ zugeordnet sind, ein Kennwert gebildet werden, der gleichermaßen Aufschluss über einen Gaseinschluss im Bremssystem liefert. Werden die Druckdifferenzen $\Delta V_1$ und $\Delta V_2$ stets über die gleichen Druckbereiche bei gleichbleibenden Drücken $p_1$, $p_2$ und $p_3$ betrachtet, liefert das Verhältnis $\Delta V_1$ zu $\Delta V_2$ einen Kennwert, der die gleiche Aussage zum Gaseinschluss wie der Druckgradientenkennwert R aus dem Verhältnis der Druckgradienten $\gamma_1$ zu $\gamma_2$ liefert.

Die Volumenänderung $\Delta V_1$ bzw. $\Delta V_2$, die der jeweiligen Druckänderung $\Delta p_1$ bzw. $\Delta p_2$ zugeordnet ist, stellt ein verschobenes Hydraulikvolumen im Bremssystem dar. Dieses wird entweder aus einer Druckänderung in einem Hochdruckspeicher des Bremssystems ermittelt oder über die Drehzahl einer Hydraulikpumpe oder aus dem Weg eines Bremskolbens.

## Patentansprüche

1. Verfahren zur Erkennung eines Gaseinschlusses in einem hydraulischen Bremssystem, insbesondere in Kraftfahrzeugen, wobei bei einer Bremsbetätigung der Druckgradient ($\gamma_1$, $\gamma_2$) des Hydraulikmediums als Verhältnis aus verschobenem Hydraulikvolumen ($\Delta V_1$, $\Delta V_2$) im Bremssystem (1) und zugeordneter Druckdifferenz ($\Delta p_1$, $\Delta p_2$) bestimmt wird, wobei ein Kennwert (R) aus dem Quotienten von zwei verschiedenen Druckgradienten ($\gamma_1$, $\gamma_2$) bzw. hiermit korrespondierenden Werten ermittelt und ein einen Grenzwert übersteigender Gaseinschluss erkannt wird, falls der Kennwert (R) außerhalb eines definierten Wertebereichs liegt.

2. Verfahren nach Anspruch 1, **dadurch gekennzeichnet, dass** der Gaseinschluss erkannt wird, falls der Kennwert (R) einen Schwellenwert ($R_{Lim}$)

überschreitet.

3. Verfahren nach Anspruch 1 oder 2, **dadurch gekennzeichnet, dass** der erste Druckgradient ($\gamma_1$) im ursprungsnahen Bereich der Volumen-Druck-Kennlinie bestimmt wird.

4. Verfahren nach einem der Ansprüche 1 bis 3, **dadurch gekennzeichnet, dass** die Hydraulikvolumina ($\Delta V_1$, $\Delta V_2$) zur Bestimmung der Druckgradienten ($\gamma_1$, $\gamma_2$) in konstanten, gleichbleibenden Druckbereichen ($\Delta p_1$, $\Delta p_2$) ermittelt werden.

5. Verfahren nach einem der Ansprüche 1 bis 4, **dadurch gekennzeichnet, dass** das Verfahren nur bis zum Erreichen eines Maximaldrucks durchgeführt wird.

6. Verfahren nach einem der Ansprüche 1 bis 5, **dadurch gekennzeichnet, dass** das Verfahren nur durchgeführt wird, wenn die Betätigungsgeschwindigkeit des Bremspedals (5) innerhalb eines zulässigen Wertebereichs liegt.

7. Verfahren nach einem der Ansprüche 1 bis 6, **dadurch gekennzeichnet, dass** das Verfahren nur durchgeführt wird, wenn zuvor ein Bremsvorgang mit einem Bremsdruck innerhalb eines zulässigen Wertebereichs stattgefunden hat und der Zeitabstand zwischen dem Bremsvorgang und der Gaseinschlusserkennung einen Maximalwert nicht übersteigt.

8. Verfahren nach einem der Ansprüche 1 bis 7, **dadurch gekennzeichnet, dass** das Verfahren nur durchgeführt wird, wenn die seit dem letzten Bremsvorgang beobachtete Querbeschleunigung einen definierten Maximalwert nicht übersteigt.

9. Steuereinheit, ausgelegt zur Durchführung des Verfahrens des Anspruchs 1.

10. Bremssystem in einem Fahrzeug mit einem Regel- bzw. Steuergerät nach Anspruch 9.

## Claims

1. Method for detecting a gas occlusion in a hydraulic brake system, in particular in motor vehicles, wherein in the case of activation of the brakes the pressure gradient ($\gamma_1$, $\gamma_2$) of the hydraulic medium is determined at a ratio of a displaced hydraulic volume ($\Delta V_1$, $\Delta V_2$) in the brake system (1) and an assigned pressure difference ($\Delta p_1$, $\Delta p_2$), wherein a characteristic value (R) of the quotient of two different pressure gradients ($\gamma_1$, $\gamma_2$) or values corresponding thereto and a gas occlusion which exceeds a limiting value is detected if the characteristic value (R) is outside a defined value range.

2. Method according to Claim 1, **characterized in that** the gas occlusion is detected if the characteristic value (R) exceeds a threshold value ($R_{Lim}$).

3. Method according to Claims 1 or 2, **characterized in that** the first pressure gradient ($\gamma_1$) is determined in the part of the volume/pressure characteristic curve which is near to the origin.

4. Method according to one of Claims 1 to 2, **characterized in that** the hydraulic volumes ($\Delta V_1$, $\Delta V_2$) is determined in constant, unchanging pressure ranges ($\Delta p_1$, $\Delta p_2$) in order to determine the pressure gradients ($\gamma_1$, $\gamma_2$).

5. The method according to one of Claims 1 to 4, **characterized in that** the method is carried out only until a maximum pressure is reached.

6. Method according to one of Claims 1 to 5, **characterized in that** the method is carried out only if the activation speed of the brake pedal (5) is within a permissible value range.

7. Method according to one of Claims 1 to 6, **characterized in that** the method is carried out only if a braking process has previously taken place with a brake pressure within a permissible value range and the time interval between the braking process and the detection of the gas occlusion does not exceed a maximum value.

8. Method according to one of Claims 1 to 7, **characterized in that** the method is carried out only if the lateral acceleration which has been observed since the last braking process does not exceed a defined maximum value.

9. Control unit, configured to carry out the method according to Claim 1.

10. Brake system in a vehicle having a closed-loop or open-loop control device according to Claim 9.

## Revendications

1. Procédé pour détecter une inclusion de gaz dans un système de freinage hydraulique, en particulier dans des véhicules automobiles, le gradient de pression ($y_1$, $y_2$) du fluide hydraulique étant déterminé lors de l'actionnement du frein en tant que rapport du volume hydraulique déplacé ($\Delta V_1$, $\Delta V_2$) dans le système de freinage (1) et de la différence de pression associée ($\Delta p_1$, $\Delta p_2$), une valeur caractéristique (R) étant déterminée à partir du quotient de deux gradients de pression différents ($y_1$, $y_2$) ou de valeurs correspondant à ceux-ci et une inclusion de gaz dépassant une valeur limite étant reconnu si la valeur caractéristique (R) est située en dehors d'une plage de valeurs définie.

2. Procédé selon la revendication 1, **caractérisé en ce que** l'inclusion de gaz est reconnue si la valeur caractéristique (R) dépasse une valeur de seuil ($R_{Lim}$).

3. Procédé selon la revendication 1 ou 2, **caractérisé en ce que** le premier gradient de pression ($y_1$) est déterminé dans la zone proche du début de la courbe caractéristique volume-pression.

4. Procédé selon l'une quelconque des revendications 1 à 3, **caractérisé en ce que** les volumes hydrauliques ($\Delta V_1$, $\Delta V_2$) pour déterminer les gradients de pression ($y_1$, $y_2$) sont déterminés dans des plages de pression constantes et uniformes ($\Delta p_1$, $\Delta p_2$).

5. Procédé selon l'une quelconque des revendications 1 à 4, **caractérisé en ce que** le procédé n'est mis en oeuvre que jusqu'à l'obtention d'une pression maximale.

6. Procédé selon l'une quelconque des revendications 1 à 5, **caractérisé en ce que** le procédé n'est mis en oeuvre que lorsque la vitesse d'actionnement de la pédale de frein (5) est située dans une plage de valeurs admissibles.

7. Procédé selon l'une quelconque des revendications 1 à 6, **caractérisé en ce que** le procédé n'est mis en oeuvre que si une opération de freinage a eu lieu préalablement avec une pression de frein à l'intérieur d'une plage de valeurs admissibles et que l'intervalle de temps entre l'opération de freinage et la reconnaissance d'une inclusion de gaz ne dépasse pas une valeur maximale.

8. Procédé selon l'une quelconque des revendications 1 à 7, **caractérisé en ce que** le procédé n'est mis en oeuvre que si l'accélération transversale observée depuis la dernière opération de freinage ne dépasse pas une valeur maximale définie.

9. Unité de commande, conçue pour mettre en oeuvre le procédé selon la revendication 1.

10. Système de freinage dans un véhicule comprenant un appareil de réglage ou de commande selon la revendication 9.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19603863